(19) **Europäisches Patentamt**
**European Patent Office**
**Office européen des brevets**

(11) **EP 2 368 088 B1**

(12) **FASCICULE DE BREVET EUROPEEN**

(45) Date de publication et mention
de la délivrance du brevet:
**14.11.2018 Bulletin 2018/46**

(51) Int Cl.:
***G01C 19/56*** *(2012.01)*

(21) Numéro de dépôt: **09804283.1**

(86) Numéro de dépôt international:
**PCT/FR2009/001470**

(22) Date de dépôt: **22.12.2009**

(87) Numéro de publication internationale:
**WO 2010/072922 (01.07.2010 Gazette 2010/26)**

(54) **PROCEDE DE DETERMINATION D'UNE VITESSE DE ROTATION D'UN CAPTEUR VIBRANT AXISYMETRIQUE, ET DISPOSITIF INERTIEL METTANT EN OEUVRE LE PROCEDE**

VERFAHREN ZUM BESTIMMEN DER ROTATIONSGESCHWINDIGKEIT EINES AXISYMMETRISCHEN VIBRATIONSSENSORS UND TRÄGHEITSANORDNUNG ZUR IMPLEMENTIERUNG DES VERFAHRENS

METHOD FOR DETERMINING THE ROTATION SPEED OF AN AXISYMMETRICAL VIBRATING SENSOR AND INERTIAL DEVICE FOR IMPLEMENTING SAID METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807441**

(43) Date de publication de la demande:
**28.09.2011 Bulletin 2011/39**

(73) Titulaire: **Safran Electronics & Defense**
**92100 Boulogne-Billancourt (FR)**

(72) Inventeur: **ROBERFROID, David**
**92100 Boulogne-Billancourt (FR)**

(74) Mandataire: **Lavialle, Bruno François Stéphane et al**
**Cabinet Boettcher**
**16, rue Médéric**
**75017 Paris (FR)**

(56) Documents cités:
**EP-A- 1 445 580          EP-A2- 2 181 305**
**US-A1- 2006 037 417**

**Description**

La présente invention concerne un procédé de détermination d'une vitesse de rotation d'un capteur vibrant axisymétrique, et un dispositif inertiel correspondant comportant un capteur vibrant axisymétrique. L'invention concerne plus particulièrement les capteurs présentant une dérive angulaire de la position de la vibration dépendant harmoniquement de la position de la dite vibration par rapport au boîtier de l'appareil.

ARRIERE PLAN DE L'INVENTION

On sait que, pour déterminer l'orientation d'un porteur, en particulier pour assurer la navigation d'un avion, il est possible d'utiliser un dispositif inertiel comportant un ou plusieurs capteurs vibrants axisymétriques utilisant un résonateur possédant une symétrie d'ordre égal ou supérieur à quatre et mettant en oeuvre deux modes de vibration dégénérés, identiques et orthogonaux, dont la déformée possède une périodicité d'ordre n par rapport à l'axe de symétrie, c'est-à-dire une déformée comportant n fois la même figure de vibration sur un tour autour de l'axe de symétrie. En particulier, il est connu d'utiliser des capteurs d'ordre deux tels que des capteurs vibrants à cloche hémisphérique comportant un nombre approprié d'électrodes, ou des quapasons pour lesquels les orientations de vibration des deux modes ne sont pas géométriquement orthogonales mais sont modalement orthogonales, c'est-à-dire modalement dé-calées de $\pi$.

On sait également qu'un capteur vibrant axisymétrique est adapté à fonctionner en mode gyroscopique ou en mode gyrométrique. Dans le mode gyroscopique, la vibration est entretenue mais sa position est laissée libre ; lorsque l'orientation du porteur évolue, la position de la vibration par rapport à l'embase est représentative de l'angle dont le porteur a tourné.

Dans le mode gyrométrique, la vibration est entretenue et sa position par rapport à son embase est maintenue fixe par l'envoi d'une commande électronique appropriée ; la valeur de cette commande est alors représentative de la vitesse de rotation du porteur dans l'espace inertiel.

On sait également que les gyroscopes vibrants présentent une erreur de dérive qui se traduit lorsque le gyroscope fonctionne en mode gyroscopique par une variation de la position de la vibration même lorsque le porteur n'est soumis à aucune rotation. Cette dérive comporte deux composantes, une composante constante qui, dans le cas d'un gyroscope résonant hémisphérique, est de l'ordre de quelques centièmes de degrés par heure, et une composante appelée dérive alternative qui est composée d'harmoniques, principalement d'un harmonique du même ordre n que le capteur vibrant et d'un harmonique d'ordre double de celui du capteur vibrant dépendant de la position de la vibration. Dans le cas d'un gyroscope résonant hémisphérique, l'harmonique d'ordre n engendre une erreur de dérive de l'ordre d'un degré par heure et l'harmonique d'ordre 2n engendre une erreur de dérive de l'ordre d'un dixième de degré par heure.

Il est connu d'effectuer un étalonnage des gyroscopes en atelier et d'établir des tables de correction qui peuvent être appliquées lors de l'utilisation du gyroscope. Toutefois, l'erreur de dérive est non seulement fonction de la position de la vibration mais également de la température ambiante et du vieillissement du gyroscope. En pratique les possibilités de correction sont donc limitées.

Par ailleurs, il est connu du document US2006/037417 un procédé de mesure d'une vitesse de rotation au moyen d'un gyromètre vibrant qui prévoit de comparer des signaux prédits au moyen de modèles à des signaux mesurés lors d'une précession jusqu'à une position prédéterminée de la vibration. De cette comparaison sont tirées des données de mise à jour des modèles. Ceci ne concerne donc pas directement la détermination de la vitesse de rotation mais une étape permettant de mieux connaître le comportement du gyromètre. La détermination de la vitesse de rotation consiste à mettre le gyromètre en vibration à une fréquence double de la fréquence naturelle d'oscillation du gyromètre et à mesurer la précession.

Il est connu du document EP 2181305 A2 un procédé de détermination d'une vitesse de rotation d'un capteur vibrant axisymétrique ayant un organe vibrant associé à des électrodes de commande et des électrodes de détection pour générer une vibration ayant une déformée possédant une périodicité d'ordre n et ayant une position variable en fonction de la rotation du capteur, comprenant l'étape d'appliquer une commande de précession. La vitesse de rotation est déterminée à partir d'une moyenne des évaluations de la vitesse de rotation pour un nombre N de positions de la vibration par rapport aux électrodes.

OBJET DE L'INVENTION

Un but de l'invention est de déterminer la vitesse de rotation d'un capteur vibrant axisymétrique en minimisant l'erreur de dérive.

RESUME DE L'INVENTION

En vue de la réalisation de ce but, on propose selon l'invention un procédé de détermination d'une vitesse de rotation d'un capteur vibrant axisymétrique ayant un organe vibrant associé à des électrodes de commande et des électrodes de détection pour générer une vibration ayant une déformée possédant une périodicité d'ordre n et ayant une position variable en fonction de la rotation du capteur, le procédé comportant les étapes de :

- effectuer une évaluation de la vitesse de rotation successivement pour un nombre au moins égal à 2N+1 de positions de la vibration par rapport aux électrodes, les positions étant géométriquement décalées les unes par rapport aux autres et la vibration étant déplacée d'une position à l'autre par application d'une commande de précession en utilisant un facteur d'échelle préétabli,
- identifier au moins une dérive harmonique de la vibration jusqu'à un rang N à partir de 2N+1 évaluations, l'identification de la dérive jusqu'à un ordre N est réalisée sur la base d'un modèle d'erreur de dérive harmonique à 2N+1 inconnues,
- déterminer une vitesse de rotation à partir d'au moins une des évaluations dont a été retranchée la dérive harmonique identifiée.

Chaque évaluation comprend la dérive non harmonique de vitesse de capteur, la dérive harmonique de vitesse et du bruit. La phase d'identification permet d'identifier la dérive harmonique jusqu'au rang N pour la retrancher d'au moins une des évaluations de manière à déterminer une vitesse de rotation qui ne soit plus affectée par cette dérive.

Grâce à l'invention, le défaut de dérive résiduel est ainsi faible et dû à la dérive non harmonique ainsi qu'à des dérives harmoniques de rang plus élevé ayant une amplitude relativement faible. Ce défaut pourra alors être compensé lors de la calibration initiale du dispositif et seules les évolutions d'une valeur initialement faible et compensée viendront perturber la mesure de vitesse de rotation du dispositif.

Avantageusement, le procédé comprend les étapes de retrancher la dérive harmonique de plusieurs évaluations et d'effectuer une moyenne de ces évaluations.

Ainsi, le moyennage permet de réduire le bruit, améliorant encore la précision de la vitesse déterminée.

Les défauts de linéarité générés par les codeurs électroniques utilisés pour la mesure de la position angulaire de la vibration étant maximaux pour des valeurs d'entrée nulles, on pourra choisir les angles servant à la mesure de la vitesse de rotation en évitant les valeurs nulles de sortie des électrodes de détection (signaux d'entrée des codeurs angulaires).

Il convient par ailleurs de remarquer que l'invention décrite attribue par principe l'écart de mesure de vitesse de rotation entre les diverses positions de la vibration à la dérive harmonique du résonateur : il est donc nécessaire que la vitesse de rotation appliquée au capteur soit constante pendant l'ensemble des mesures, faute de quoi l'annulation des termes harmoniques de dérive ne pourra pas être réalisée. En fait, la contrainte réelle est de connaître l'écart de vitesse de rotation entre les périodes de temps correspondant aux mesures, la vitesse constante n'étant que le cas particulier où cet écart est nul.

L'invention a également pour objet un dispositif inertiel pour la mise en oeuvre du procédé de l'invention. Ce dispositif inertiel comprend un capteur vibrant axisymétrique, ayant un organe vibrant associé à des électrodes de commande et des électrodes de détection, des moyens pour exciter le capteur de façon à générer une vibration ayant une déformée possédant une périodicité d'ordre n et ayant une position variable en fonction de la rotation du capteur, et comporte des moyens pour effectuer une évaluation de la vitesse de rotation du capteur pour chacune de 2N+1 positions de la vibration par rapport aux électrodes, des moyens pour appliquer des commandes de précession en utilisant un facteur d'échelle préétabli jusqu'à ce que la vibration atteigne chacune des 2N+1 positions, et des moyens pour identifier au moins une dérive harmonique de la vibration jusqu'à un rang N et déterminer la vitesse de rotation à partir d'au moins une des évaluations dont a été retranchée ladite au moins une dérive harmonique identifiée, l'identification de la dérive jusqu'à un ordre N est réalisée sur la base d'un modèle d'erreur de dérive harmonique à 2N+1 inconnues.

BREVE DESCRIPTION DES DESSINS

D'autres caractéristiques et avantages de l'invention apparaîtront à la lecture de la description qui suit d'un mode de mise en oeuvre particulier non limitatif de l'invention en référence aux figures ci-jointes parmi lesquelles :

- la figure 1 est une vue en coupe axiale schématique selon la ligne I-I de la figure 2 d'un capteur vibrant à cloche hémisphérique,
- la figure 2 est une vue en coupe selon la ligne II-II de la figure 1,
- la figure 3 est un schéma par blocs illustrant un exemple de mise en oeuvre du procédé de l'invention et de ses différentes applications,

- la figure 4 est une représentation schématique du globe terrestre et d'un capteur vibrant illustrant l'application de l'invention pour la recherche du nord.

DESCRIPTION DETAILLEE DE L'INVENTION

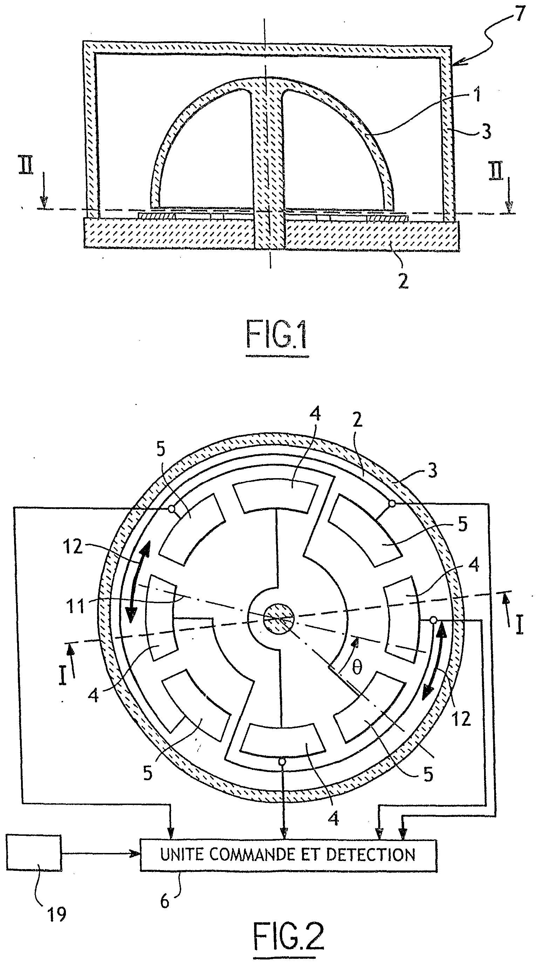

En référence aux figures 1 et 2, le dispositif inertiel selon l'invention est illustré avec un capteur vibrant avec une déformée d'ordre deux. Le dispositif comporte un capteur vibrant 7 à cloche hémisphérique comprenant de façon connue en soi une cloche en silice 1 montée sur une embase 2 également en silice, la cloche 1 étant entourée d'un boîtier étanche 3 permettant de mettre le capteur sous vide.

Egalement de façon connue en soi, la surface interne de la cloche 1 est métallisée ainsi que son bord inférieur et celui-ci s'étend en regard de deux paires d'électrodes de commande 4 et de deux paires d'électrodes de détection 5 convenablement reliées à une unité de commande et de détection 6 pour générer une vibration 11 illustrée par un trait mixte sur la figure 2 et dont la position est repérée par un angle Θ par rapport à une électrode de référence 5. La position de la vibration 11 est commandée par l'unité de commande 6 en appliquant aux électrodes de commande 4 une commande de précession.

Le procédé conforme à l'invention comprend les étapes de :

- effectuer une évaluation de la vitesse de rotation successivement pour un nombre au moins égal à 2N+1 de positions de la vibration par rapport aux électrodes, les positions étant géométriquement décalées les unes par rapport aux autres et la vibration étant déplacée d'une position à l'autre par application d'une commande de précession en utilisant un facteur d'échelle préétabli,
- identifier au moins une dérive harmonique de la vibration jusqu'à un rang N à partir de 2N+1 évaluations,
- déterminer une vitesse de rotation à partir d'au moins une des évaluations dont a été retranchée la dérive harmonique identifiée.

Le modèle d'erreur de dérive harmonique d'un capteur vibrant axisymétrique est de la forme :

$$\mathrm{D\acute{e}rive} = \sum_{i=1}^{N} bc_i Cos(2i\Theta e) + \sum_{i=1}^{N} bs_i Sin(2i\Theta e)$$

où $\Theta e$ est l'angle électrique, $bc_i$ et $bs_i$ sont des constantes. L'évaluation de la vitesse pour un angle électrique $\Theta e$ donné en ne tenant compte que de la dérive harmonique de rang 1 est égale à V=bcicos $(2\Theta e)+bs_1 Sin(2\Theta e)$ +vitesse de rotation+bruit. En posant X = V-vitesse de rotation, on obtient $bc_1 Cos(2\Theta e)+bs_1 Sin(2\Theta e)=X$-bruit, soit une équation à trois inconnues $bc_1$, $bs_1$ et X.

Par l'invention, on réalise une mesure dans un nombre de positions permettant de disposer d'un nombre d'équations suffisant pour calculer les inconnues, c'est-à-dire ici trois.

Pour les angles électriques $\Theta_0$, $\Theta_1$ et $\Theta_2$, les équations seront :

$$bc_1 Cos\ (2\Theta_0)+bs_1\ sin\ (2\Theta_0)= X+bruit$$

$$bc_1 Cos\ (2\Theta_1)+bs_1\ sin\ (2\Theta_1)= X+bruit$$

$$bc_1 Cos\ (2\Theta_2)+bs_1\ sin\ (2\Theta_2)= X+bruit$$

Le calcul des inconnues est classique. Une fois les termes $bc_1$, $bs_1$ et X calculés, la dérive harmonique est calculée et retranchée d'une des évaluations pour déterminer la vitesse de rotation.

Pour obtenir une vitesse plus précise encore, la dérive harmonique est retranchée des trois évaluations pour obtenir trois vitesses de rotation dont on va calculer une moyenne retenue comme vitesse de rotation.

Ainsi, le procédé selon l'invention comporte une première étape 8 de positionnement de la vibration dans une première position $\Theta0$.

Pour la première position $\Theta0$ de la vibration, le procédé comporte une étape 9 d'évaluation de la vitesse de rotation du capteur. Cette évaluation de la vitesse de rotation est effectuée en utilisant de façon connue en soi le gyroscope selon un mode gyroscopique, ou selon un mode gyrométrique.

Dans le cas d'un mode gyroscopique, une série de mesures de la position de la vibration est effectuée dans un temps bref pendant lequel le déplacement de la vibration est faible par rapport à la période des harmoniques d'ordre deux et d'ordre quatre. En particulier, dans l'application où le procédé est mis en oeuvre pour la recherche du nord, le gyroscope est de préférence immobile par rapport à la surface terrestre, de sorte que la vitesse de rotation maximale du gyroscope est celle de la rotation terrestre, c'est-à-dire une vitesse de rotation de 15°/h. Pour une mesure de la vitesse de rotation du capteur effectuée en mode gyroscopique pendant dix secondes, la variation de position de la vibration est donc totalement négligeable.

Pour éviter toute variation de position de la vibration et pour permettre d'éviter des erreurs dues au défaut de codage de la position de la vibration, il est préférable, pour des faibles vitesses de rotation, d'effectuer une évaluation en mode gyrométrique bien que le facteur d'échelle soit moins précis que dans le mode gyroscopique.

Il est ensuite procédé à une étape de modification 10 de la position de la vibration en appliquant une commande de précession aux électrodes de commande 4, puis à une évaluation 13 de la vitesse de rotation du capteur dans la position modifiée. A titre d'exemple, la vibration est placée dans deux positions 14 modifiées $\Theta1$, $\Theta2$ décalées géométriquement de la position initiale $\Theta0$ par exemple de 20° et 90°.

Le traitement des évaluations est effectué comme indiqué ci-dessus lors d'une étape de calcul 15.

Dans les deux modes de réalisation, la position initiale peut être choisie compte tenu des positions décalées pour que dans chacune des positions le signal de détection correspondant ait une valeur non nulle pour des raisons de qualité de conversion du signal analogique fourni par les électrodes de détection 5 en un signal numérique.

Lorsque la vitesse de rotation du gyroscope n'est pas constante il reste néanmoins possible de tirer profit de l'invention. Dans ce cas il suffit de disposer d'un moyen pour effectuer une mesure 18 des variations de la vitesse de rotation et d'effectuer une déduction algébrique de ces variations de l'évaluation de vitesse de rotation qui est faite dans chaque position. Ces étapes sont par exemple mises en oeuvre par un gyroscope à écart 19 relié à l'unité de commande et de détection 6 en parallèle au capteur vibrant 7. Le gyroscope à écart 19 présente une mauvaise précision pour une mesure absolue de la vitesse mais une bonne précision pour mesurer des écarts sur un temps très court.

Le gyroscope à écart 19 est de préférence mis en oeuvre en faisant une intégration des variations mesurées sur les mêmes périodes de temps qu'une intégration de la vitesse de rotation mesurée avec le capteur vibrant. La moyenne donnant l'évaluation finale de la vitesse de rotation est alors obtenue très simplement en faisant la somme des intégrales et en divisant par le temps total des mesures de la vitesse de rotation.

Le procédé selon l'invention permet en particulier d'améliorer la mise en oeuvre des applications utilisant une évaluation d'une vitesse de rotation constante, en particulier la recherche du Nord ou un alignement par rapport à un élément de référence.

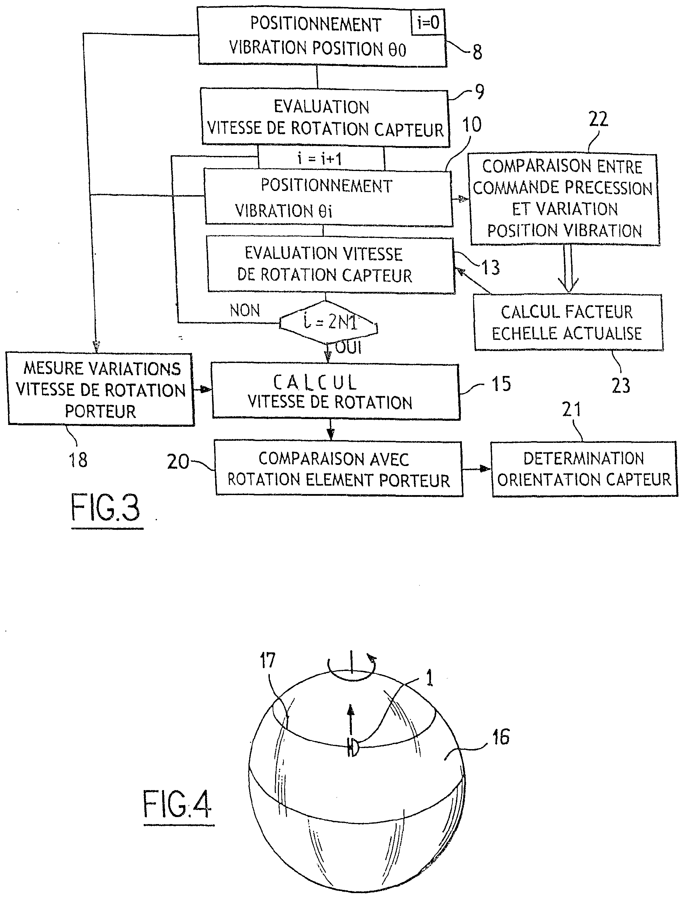

Les figures 3 et 4 illustrent une application à la recherche du Nord lorsque le dispositif inertiel contenant le capteur vibrant 1 est immobile par rapport au globe terrestre 16. Compte tenu de la rotation de la terre autour de l'axe Nord-Sud, un capteur vibrant 1 dont l'axe de symétrie s'étend parallèlement à une tangente au parallèle 17 passant par le capteur, c'est-à-dire selon une direction Est-Ouest, ne perçoit aucune rotation. A partir d'une orientation pour laquelle le capteur est soumis à une vitesse de rotation non nulle, le procédé mettant en oeuvre cette application comprend de façon connue en soi une étape de comparaison 20 de la vitesse de rotation du capteur avec la vitesse de rotation de l'élément de référence, c'est-à-dire la rotation du globe terrestre dans le cas d'un porteur au sol, et une étape 21 de détermination de l'orientation du capteur par application de formules trigonométriques donnant la composante de rotation du capteur vibrant en fonction de son orientation. La précision d'évaluation de la vitesse de rotation obtenue avec le procédé selon l'invention permet de mettre en oeuvre cette application avec une précision améliorée pour la détermination du Nord. Afin d'obtenir la meilleure précision de la détermination du Nord l'axe de symétrie du gyroscope est de préférence placé approximativement selon une direction Est-Ouest.

Dans le cas d'un alignement du dispositif inertiel avant une navigation, le dispositif inertiel comprend de préférence trois capteurs vibrants dont les axes sont disposés selon des directions orthogonales.

Selon encore un autre aspect de l'invention, la modification de la position de la vibration pour l'évaluation de la vitesse de rotation donne l'occasion d'effectuer une comparaison 22 entre la commande de précession et la variation de la position de la vibration et d'effectuer un calcul 23 du facteur d'échelle actualisé qui peut immédiatement servir à l'évaluation de la vitesse de rotation du capteur vibrant.

Les différentes étapes du procédé de l'invention sont de préférence mises en oeuvre par des logiciels intégrés à l'unité de commande 6 qui forme un dispositif inertiel avec le capteur vibrant.

Bien entendu, l'invention n'est pas limitée aux modes de mise en oeuvre décrits et est susceptible de variantes de réalisation qui apparaîtront à l'homme du métier sans sortir du cadre de l'invention tel que défini par les revendications.

En particulier, bien que les applications aient été décrites pour un capteur vibrant immobile par rapport au sol, le procédé selon l'invention peut également être utilisé lorsque le dispositif inertiel est installé dans un porteur mobile par rapport au sol.

Bien que l'invention ait été décrite en relation avec un gyroscope d'ordre deux ($n$=2), elle s'applique également à un gyroscope d'ordre plus élevé.

Les angles entre les positions peuvent être identiques ou différents, de même que les durées d'évaluation dans les différentes positions.

Le nombre de positions peut être supérieur à 2N+1.

Le procédé de l'invention peut être mis en oeuvre de façon continue, par exemple au moyen d'une intégration d'angle ou d'attitude (en utilisant des mesures gyroscopiques et/ou gyrométriques) ou de navigation (en utilisant alors des mesures gyroscopiques et/ou gyrométriques et des mesures accélérométriques) et d'un filtre de KALMAN intégrant un modèle d'erreurs adapté aux capteurs.

Le procédé de l'invention peut comporter les étapes de :

- calculer une moyenne des évaluations,
- calculer une dérive harmonique moyenne,
- retrancher la dérive harmonique moyenne de la moyenne des évaluations.

Il est en outre possible d'effectuer des corrections supplémentaires à celles du présent procédé.

## Revendications

1. Procédé de détermination d'une vitesse de rotation d'un capteur vibrant axisymétrique (7) ayant un organe vibrant (1) associé à des électrodes de commande (4) et des électrodes de détection (5) pour générer une vibration ayant une déformée possédant une périodicité d'ordre n et ayant une position ($\Theta$) variable en fonction de la rotation du capteur, **caractérisé en ce qu'**il comporte les étapes de

   - effectuer une évaluation de la vitesse de rotation successivement pour un nombre au moins égal à 2N+1 de positions de la vibration par rapport aux électrodes, les positions étant géométriquement décalées les unes par rapport aux autres et la vibration étant déplacée d'une position à l'autre par application d'une commande de précession en utilisant un facteur d'échelle préétabli,
   - identifier au moins une dérive harmonique de la vibration jusqu'à un rang N à partir de 2N+1 évaluations, l'identification de la dérive jusqu'à un ordre N est réalisée sur la base d'un modèle d'erreur de dérive harmonique à 2N+1 inconnues,
   - déterminer une vitesse de rotation à partir d'au moins une des évaluations dont a été retranchée la dérive harmonique identifiée.

2. Procédé selon la revendication 1, comprenant les étapes de retrancher la dérive harmonique de plusieurs évaluations et d'effectuer une moyenne de ces évaluations.

3. Procédé selon la revendication 1, comprenant les étapes de :

   - calculer une moyenne des évaluations,
   - calculer une dérive harmonique moyenne,
   - retrancher la dérive harmonique moyenne de la moyenne des évaluations.

4. Procédé selon tout ou partie des revendications précédentes, **caractérisé en ce qu'**il comporte l'étape préalable de commander le positionnement de la vibration selon des angles choisis pour qu'un signal de détection correspondant ait une valeur non nulle.

5. Procédé selon l'une quelconque des revendications précédentes, **caractérisé en ce qu'**il comporte les étapes :

   - d'effectuer une comparaison (22) entre la commande de précession et une variation d'angle effectif correspondante,
   - et d'en déduire une valeur actualisée (23) du facteur d'échelle.

6. Procédé selon la revendication 2, **caractérisé en ce qu'**il comporte les étapes de :

   - mesurer (18) des variations de la vitesse de rotation du capteur et
   - effectuer une déduction algébrique des variations mesurées lors de l'établissement de la moyenne des évaluations de vitesses de rotation.

**7.** Dispositif inertiel comprenant un capteur vibrant axisymétrique (7), ayant un organe vibrant (1) associé à des électrodes de commande (4) et des électrodes de détection (5), des moyens (6) pour exciter le capteur de façon à générer une vibration ayant une déformée possédant une périodicité d'ordre n et ayant une position variable en fonction de la rotation du capteur, **caractérisé en ce qu'**il comporte des moyens pour effectuer une évaluation (9) de la vitesse de rotation du capteur pour chacune de 2N+1 positions de la vibration par rapport aux électrodes, des moyens pour appliquer des commandes de précession (10) en utilisant un facteur d'échelle préétabli jusqu'à ce que la vibration atteigne chacune des 2N+1 positions, et des moyens pour identifier au moins une dérive harmonique de la vibration jusqu'à un rang N et déterminer la vitesse de rotation à partir d'au moins une des évaluations dont a été retranchée ladite au moins une dérive harmonique identifiée, l'identification de la dérive jusqu'à un ordre N est réalisée sur la base d'un modèle d'erreur de dérive harmonique à 2N+1 inconnues.

**8.** Dispositif inertiel selon la revendication 7, dans lequel les moyens d'identification et de détermination sont agencés pour retrancher la dérive harmonique de plusieurs évaluations et d'effectuer une moyenne de ces évaluations.

**9.** Dispositif selon la revendication 7, **caractérisée en ce qu'**il comporte :

- des moyens pour effectuer une comparaison (22) entre chaque commande de précession et une variation d'angle effectif correspondante,
- et des moyens pour déduire une valeur actualisée (23) du facteur d'échelle.

**10.** Dispositif selon la revendication 7, **caractérisé en ce qu'**il comporte :

- des moyens (19) pour mesurer des variations de la vitesse de rotation du capteur et
- des moyens pour effectuer une déduction algébrique des variations mesurées lors de l'établissement de la moyenne des évaluations de vitesses de rotation.

**Patentansprüche**

**1.** Verfahren zur Bestimmung einer Drehgeschwindigkeit eines achsensymmetrischen Vibrationssensors (7), der ein Vibrationsorgan (1) hat, das mit Steuerelektroden (4) und Erfassungselektroden (5) verbunden ist, um eine Schwingung zu erzeugen, die eine Verformung hat, die eine Periodizität n-ter Ordnung besitzt und eine in Abhängigkeit von der Drehung des Sensors variable Position ($\Theta$) hat, **dadurch gekennzeichnet, dass** es die Schritte umfasst:

- Durchführen einer Ermittlung der Drehgeschwindigkeit nacheinander für eine Anzahl von wenigstens gleich 2N+1 Positionen der Schwingung relativ zu den Elektroden, wobei die Positionen geometrisch zueinander versetzt sind und die Schwingung von einer Position zur anderen durch Anwendung einer Präzessionssteuerung unter Verwendung eines vorher festgelegten Skalenfaktors verschoben wird,
- Identifizieren mindestens einer harmonischen Drift der Schwingung bis zu einem Rang N anhand der 2N+1 Ermittlungen, wobei die Identifikation der Drift bis zu einer Ordnung N auf der Basis eines Modells eines Driftfehlers der Harmonischen mit 2N+1 Unbekannten erfolgt,
- Bestimmen einer Drehgeschwindigkeit anhand mindestens einer der Ermittlungen, von der man die identifizierte harmonische Drift abgezogen hat.

**2.** Verfahren nach Anspruch 1, umfassend die Schritte des Abziehens der harmonischen Drift von mehreren Ermittlungen und des Bildens eines Mittelwertes dieser Ermittlungen.

**3.** Verfahren nach Anspruch 1, umfassend die Schritte:

- Berechnen eines Mittelwertes der Ermittlungen,
- Berechnen einer mittleren harmonischen Drift,
- Abziehen der mittleren harmonischen Drift von dem Mittelwert der Ermittlungen.

**4.** Verfahren nach allen oder einem Teil der vorhergehenden Ansprüche, **dadurch gekennzeichnet, dass** es den vorherigen Schritt des Steuerns der Positionierung der Schwingung gemäß gewählten Winkeln umfasst, damit ein entsprechendes Erfassungssignal einen Wert von ungleich Null hat.

**5.** Verfahren nach einem der vorhergehenden Ansprüche, **dadurch gekennzeichnet, dass** es die Schritte umfasst:

- Durchführens eines Vergleichs (22) zwischen der Präzessionssteuerung und einer entsprechenden Ist-Winkelveränderung,
- und daraus Herleiten eines aktualisierten Wertes (23) des Skalenfaktors.

6. Verfahren nach Anspruch 2, **dadurch gekennzeichnet, dass** es die Schritte umfasst:

- Messen (18) der Veränderungen der Drehgeschwindigkeit des Sensors und
- Durchführen einer algebraischen Deduktion der Veränderungen, die beim Bilden des Mittelwertes der Drehgeschwindigkeitsermittlungen gemessen werden.

7. Trägheitsvorrichtung, umfassend einen achsensymmetrischen Vibrationssensor (7), der ein Vibrationsorgan (1) hat, das mit Steuerelektroden (4) und Erfassungselektroden (5) verbunden ist, Mittel (6), um den Sensor derart anzuregen, dass er eine Schwingung erzeugt, die eine Verformung hat, die eine Periodizität n-ter Ordnung besitzt und eine in Abhängigkeit von der Drehung des Sensors variable Position hat, **dadurch gekennzeichnet, dass** sie Mittel umfasst, um eine Ermittlung (9) der Drehgeschwindigkeit des Sensors für jede von 2N+1 Positionen der Schwingung relativ zu den Elektroden durchzuführen, Mittel zum Anwenden von Präzessionssteuerungen (10), indem ein vorher festgelegter Skalenfaktor verwendet wird, bis die Schwingung jede der 2N+1 Positionen erreicht, und Mittel zum Identifizieren mindestens einer harmonischen Drift der Schwingung bis zu einem Rang N und Bestimmen der Drehgeschwindigkeit anhand mindestens einer der Ermittlungen, von der man die genannte mindestens eine identifizierte harmonische Drift abgezogen hat, wobei die Identifikation der Drift bis zu einer Ordnung N auf der Basis eines Modells eines Driftfehlers der Harmonischen mit 2N+1 Unbekannten erfolgt.

8. Trägheitsvorrichtung nach Anspruch 7, bei der die Identifikations- und Bestimmungsmittel so ausgebildet sind, dass sie die harmonische Drift von mehreren Ermittlungen abziehen und einen Mittelwert dieser Ermittlungen bilden.

9. Vorrichtung nach Anspruch 7, **dadurch gekennzeichnet, dass** sie umfasst:

- Mittel zum Durchführen eines Vergleichs (22) zwischen jeder Präzessionssteuerung und einer entsprechenden Ist-Winkelveränderung
- und Mittel zum Herleiten eines aktualisierten Wertes (23) des Skalenfaktors.

10. Vorrichtung nach Anspruch 7, **dadurch gekennzeichnet, dass** sie umfasst:

- Mittel (19) zum Messen der Veränderungen der Drehgeschwindigkeit des Sensors und
- Mittel zum Durchführen einer algebraischen Deduktion der Veränderungen, die beim Bilden des Mittelwertes der Drehgeschwindigkeitsermittlungen gemessen werden.

**Claims**

1. Method of determining a rotation speed of an axisymmetric vibrating sensor (7) including a vibrating member (1) associated with control electrodes (4) and detection electrodes (5) for generating a vibration having a deformation having a periodicity of order n and having a position (Θ) variable as a function of the rotation of the sensor, **characterized in that** it includes the steps of:

- effecting an evaluation of the rotation speed successively for a number at least equal to 2N + 1 positions of the vibration relative to the electrodes, the positions being geometrically offset from one another and the vibration being moved from one position to another by applying a precession command using a pre-established scale factor,
- identifying at least one harmonic derivative of the vibration up to a rank N from 2N + 1 evaluations, the identification of the derivative up to an order N is based on a harmonic derivative error model with 2N + 1 unknowns,
- determining a rotation speed from at least one of the evaluations from which the identified harmonic derivative has been subtracted.

2. Method according to claim 1, comprising the steps of subtracting the harmonic derivative from a plurality of evaluations and averaging said evaluations.

3. Method according to claim 1, comprising the steps of:

- calculating an average of the evaluations,
- calculating an average harmonic derivative,
- subtracting the average harmonic derivative from the average of the evaluations.

4. Method according to some or all of the preceding claims, **characterized in that** it includes the prior step of commanding the positioning of the vibration at selected angles so that a corresponding detection signal has a non-zero value.

5. Method according to any one of the preceding claims, **characterized in that** it includes the steps:

- (22) of effecting a comparison between the precession command and a corresponding effective angle variation,
- and (23) of deducing therefrom an updated value of the scale factor.

6. Method according to claim 2, **characterized in that** it includes the steps of:

- (18) measuring variations in the rotation speed of the sensor and
- effecting an algebraic deduction of the variations measured during the averaging of the rotation speed evaluations.

7. Inertial device comprising an axisymmetric vibrating sensor (7), including a vibrating member (1) associated with control electrodes (4) and detection electrodes (5), means (6) for exciting the sensor so as to generate a vibration having a deformation having a periodicity of order n and having a position varying as a function of the rotation of the sensor, **characterized in that** it includes means (9) for effecting an evaluation of the rotation speed of the sensor for each of 2N + 1 positions of the vibration relative to the electrodes, means (10) for applying precession commands using a pre-established scale factor until the vibration reaches each of the 2N + 1 positions, and means for identifying at least one harmonic derivative of the vibration up to a rank N and determining the rotation speed from at least one of the evaluations from which said identified at least one harmonic derivative has been subtracted, the identification of the derivative up to an order N is based on a harmonic derivative error model with 2N + 1 unknowns.

8. Inertial device according to claim 7, wherein the identification and determination means are adapted to subtract the harmonic derivative of a plurality of evaluations and to average said evaluations.

9. Device according to claim 7, **characterized in that** it includes:

- means (22) for effecting a comparison between each precession command and a corresponding effective angle variation,
- and means (23) for deducting an updated value of the scale factor.

10. Device according to Claim 7, **characterized in that** it includes:

- means (19) for measuring variations in the rotation speed of the sensor and
- means for effecting an algebraic deduction of the variations measured while establishing the average of the rotation speed evaluations.

FIG.1

UNITE COMMANDE ET DETECTION

FIG.2

**FIG.3**

**FIG.4**

## RÉFÉRENCES CITÉES DANS LA DESCRIPTION

**Documents brevets cités dans la description**

- US 2006037417 A

- EP 2181305 A2